# EUROPÄISCHE PATENTANMELDUNG

(11) **EP 4 152 113 A1**
(43) Veröffentlichungstag der Anmeldung: **22.03.2023**
(21) Anmeldenummer: 21197160.1
(22) Anmeldetag: 16.09.2021
(51) Int. Cl.: G05B 23/02, G05B 19/418

(54) **VERFAHREN UND SYSTEM ZUR VERBESSERUNG DES PRODUKTIONSPROZESSES IN EINER TECHNISCHEN ANLAGE**

(71) Anmelder: Siemens Aktiengesellschaft, 80333 München (DE)
(72) Erfinder: Kisslinger, Ferdinand, 91217 Hersbruck (DE)
(74) Vertreter: Siemens Patent Attorneys

(57) **Zusammenfassung**

Die Erfindung betrifft demnach ein Verfahren und System zur Verbesserung des Produktionsprozesses in einer technischen Anlage, in welcher ein verfahrenstechnischer Prozess mit mindestens einem Prozessschritt abläuft, wobei einen Durchlauf eines Prozessschritts kennzeichnende Datensätze mit Werten von Prozessvariablen zeitabhängig erfasst und in einem Datenspeicher abgelegt werden, und pro Prozessschritt die Datensätze eines Durchlaufs als Testphase und die Datensätze mindestens eines weiteren Durchlaufs als Referenzphase ausgewählt werden. Anschließend wird paarweise eine Ähnlichkeit zwischen den Datensätzen der Testphase und mindestens einer Referenzphase bestimmt, indem mittels eines Modells Anomalie-Zustände der Testphase im Hinblick auf jede vorhandene Referenzphase bestimmt werden, eine Bewertung der Anomalie-Zustände vorgenommen wird, und mittels der Anomalie-Zustände und der Bewertungen ein Phasenähnlichkeitsmaß berechnet wird, welches zur Optimierung des Prozesses verwendet wird. Die Erfindung erlaubt vielfache Anwendungen in der Prozessoptimierung wie die Bestimmung eines sog. "goldenen Batches" sowie eine Ursachenanalyse bei fehlerhaften Batches durch Korrelation mit Metadaten.

## Beschreibung

Die Erfindung betrifft ein Verfahren und ein entsprechendes System zur Verbesserung des Produktionsprozesses in einer technischen Anlage, in welcher ein verfahrenstechnischer Prozess mit mindestens einem Prozessschritt abläuft. Die Erfindung betrifft ferner ein dazugehöriges Computerprogramm und Computerprogrammprodukt.

Die Verfahrenstechnik beschäftigt sich mit der technischen und wirtschaftlichen Durchführung aller Prozesse, in denen Stoffe oder Rohmaterial nach Art, Eigenschaft und Zusammensetzung verändert werden. Zur Umsetzung eines solchen Prozesses werden verfahrenstechnische Anlagen wie beispielsweise Raffinerien, Steamcracker oder anderen Reaktoren verwendet, in denen der verfahrenstechnische Prozess zumeist mittels Automatisierungstechnik realisiert wird. Verfahrenstechnische Prozesse werden grundsätzlich in zwei Gruppen aufgeteilt: in kontinuierliche Prozesse und in diskontinuierliche, so genannte Batch-Prozesse. Ein kompletter Produktionsprozess, d. h. ausgehend von bestimmten Edukten bis hin zum fertigen Produkt, kann auch eine Mischung aus beiden Prozessgruppen sein.

Der kontinuierliche Prozess läuft ohne Unterbrechungen ab. Es ist ein Fließprozess, das heißt es gibt einen ständigen Zu-oder Abfluss von Material, Energie oder Information. Kontinuierliche Prozesse werden bei der Verarbeitung großer Mengen mit wenigen Produktwechseln bevorzugt. Ein Beispiel wäre ein Kraftwerk, welches Strom produziert, oder eine Raffinerie, die aus Rohöl Kraftstoffe gewinnt.

Diskontinuierliche Prozesse sind alle Batch-Prozesse, die in chargenorientierter Fahrweise beispielsweise nach ISA-88 nach Rezepten ablaufen. Diese Rezepte enthalten die Information, welche Prozessschritte nacheinander oder auch parallel ausgeführt werden, um ein bestimmtes Produkt mit bestimmten Qualitätsanforderungen herzustellen. Der Einsatz von Material oder Stoffen erfolgt häufig zu unterschiedlichen Zeitpunkten, und zwar portionsweise und nichtlinear im jeweiligen Teilprozess. Dies bedeutet, dass das Produkt durch einen oder mehrere Reaktoren läuft und dort so lange verbleibt, bis die Reaktion abgelaufen ist und der nächste Produktionsschritt oder Prozessschritt vollzogen werden kann. Batch-Prozesse laufen daher grundsätzlich schrittweise mit mindestens einem Prozessschritt ab.

Die Prozessschritte können demnach auf unterschiedlichen Einheiten (physikalische Einrichtungen, in denen der Prozess ausgeführt wird) und/oder mit unterschiedlichen Steuerungsstrategien und/oder unterschiedlichen Mengen ablaufen. Häufig kommen dabei Ablaufsteuerungen (englisch: sequential functional control, abgekürzt SFC) oder auch Schrittketten zum Einsatz.

Im Folgenden wird der Begriff "Batch" als Abkürzung für einen Batch-Prozess mit mindestens einem Prozessschritt verwendet. Nach der ISA-88-Norm handelt es sich bei einem Prozessschritt um die kleinste Einheit eines Prozessmodells. Im Modell der Ablaufsteuerung (vgl. ISA-88) entspricht eine sog. Phase oder Funktion einem Prozessschritt. Solche Phasen können hintereinander (Aufheizen des Reaktors, Rühren innerhalb des Reaktors sowie Abkühlen des Reaktors), aber auch parallel zueinander laufen, wie "Rühren" und "Temperatur konstant halten". In der Regel enthält ein Batch-Prozess mehrere Prozessschritte oder Phasen.

In einem idealen Batch-Prozess wird angenommen, dass ein Prozessschritt oder eine Phase unter optimalen Bedingungen im Kontext eines speziellen Rezeptes, mit einer vorgegebenen Kontrollstrategie und in einer bestimmten Teilanlage oder Anlageneinheit abläuft. Es wird ferner erwartet, dass jeder Durchlauf dieser Chargenphase gleich ist. Außerdem zeigen alle an der Anlage angeschlossenen Messungen den gleichen Trend (Zeitreihe eines Sensorwertes), beginnend mit der Startzeit der Phase bis zur Endzeit der Phase. Dieses Verhalten kann als "Golden Batch" bezeichnet werden. Ein Golden Batch gibt somit den bisher besten erreichten Produktionszustand in Bezug auf Qualität, Quantität, Laufzeit, sowie geringstmöglicher Abfallmenge an.

In einem realen Batch-Prozess hingegen wird der Betrieb in den verfahrenstechnischen Produktionsanlagen jedoch durch eine Vielzahl von Prozessparametern, Betriebsparametern, Produktionsbedingungen, Anlagenbedingungen und Einstellungen beeinflusst, sodass ein idealer Prozess nur näherungsweise erreicht wird.

Folgende Faktoren beeinflussen beispielsweise in einem realen Prozess die korrekte Durchführung eines Prozessschritts:
- Rauschen in den Sensormesswerten,
- Umgebungsbedingungen (z. B. die Außentemperatur),
- Qualität der Edukte,
- Verschlechterung der Ausrüstung (z. B. Verstopfung eines Ventils),
- Elektrische Ausfälle der Ausrüstung (z. B. Ventile, die die Verbindung verloren haben),
- Mechanische Ausfälle der Ausrüstung (z. B. plötzliche Verstopfung eines Ventils) oder
- Schwankungen in der Qualität der Leitungen resultierend in unterschiedlichen Durchfluss.

Häufig gibt es nicht nur eine goldene Charge für eine bestimmte Phase, sondern ein Ensemble von goldenen Chargen. Außerdem gibt es gewisse Toleranzen, innerhalb derer eine Phase oder ein bestimmter Ablauf einer Phase als gut angesehen werden kann. Das Finden der goldenen Charge und der entsprechenden Toleranz ist daher ein multivariates Problem, das durch die Analyse mehrerer guter Durchläufe einer Phase gelöst werden kann. Dies ist häufig mit viel Aufwand verbunden und wird meist durch das Expertenwissen eines Operators bestimmt, wobei entweder Überwachungssysteme (Condition Monitoring Systems) entweder separat oder in Verbindung mit Prozessleitsystemen zum Einsatz kommen.

Eine gängige Methode zur Erkennung von Problemen in Batch-Prozessen ist die Überwachung der Prozesswerte anhand von Alarmschwellen. Wird ein Schwellenwert für einen bestimmten Prozesswert verletzt, wird der Betreiber einer Anlage vom Prozessleitsystem benachrichtigt. Das Einstellen dieser Schwellenwerte ist sehr aufwändig und außerdem können multivariate Abweichungen innerhalb der univariaten Schwellenwerte nicht erkannt werden.

Eine zweite Möglichkeit, Probleme bei Batch-Prozessen zu erkennen, ist die Auswertung der Labormessungen des fertigen Produkts. Liegt eine Labormessung außerhalb der Qualitätsspezifikationen, können die Verfahrenstechniker die Trenddaten der entsprechenden Chargenphasen überprüfen. Schließlich ist es die Aufgabe der Prozessexperten, die Ursache eines bestimmten Problems zu ermitteln und Maßnahmen einzuleiten, um das Problem zu lösen und es in Zukunft zu vermeiden. Dieser Ansatz der Ursachenermittlung ist sehr kostenintensiv und erfordert qualifizierte und erfahrene Prozessexperten. Ein weiterer Nachteil ist, dass, falls das Problem aufgrund einer Labormessung außerhalb des Prozesses entdeckt wird, es bereits eine Zeitverzögerung zwischen der Phase, in der das Problem entdeckt wurde, und der aktuellen Phase der Produktion gibt. Dies bedeutet, dass Produktionsprobleme häufig erst zu spät und im Nachhinein entdeckt werden.

Es ist daher die Aufgabe der vorliegenden Erfindung für Batch-Prozesse ein datenbasiertes, einfaches Verfahren und System zur Verbesserung des Produktionsprozesses anzugeben, welches insbesondere für einen Benutzer auf einfache Art und Weise erlaubt, "goldene Batches" zu bestimmen und darauf basierend weitere Analysen des Produktionsprozesses anzubieten und keine aufwändige physikalische Modellierung von komplexen nichtlinearen dynamischen Prozessen benötigt. Davon ausgehend liegt der Erfindung die Aufgabe zugrunde, ein geeignetes Computerprogramm, Computerprogrammprodukt und eine graphische Benutzeroberfläche anzugeben.

Diese Aufgabe wird durch die Merkmale des unabhängigen Patentanspruchs 1 gelöst. Außerdem wird die Aufgabe gelöst durch ein System nach Anspruch 8, ein Computerprogramm nach Anspruch 9, ein Computerprogrammprodukt nach Anspruch 10 und eine graphische Benutzeroberfläche nach Anspruch 11.

Ausgestaltungen der Erfindung, die einzeln oder in Kombination miteinander einsetzbar sind, sind Gegenstand der Unteransprüche.

Die Grundidee der vorliegenden Erfindung besteht darin, durch eine datenmodell-basierte Bestimmung eines Ähnlichkeitsmaßes von Durchläufen von Batch-Prozessschritten weitergehende Aussagen und Analysen über den Produktionsprozess zu erhalten, um so den Produktionsprozess zu optimieren. Normalerweise wird datengetriebene Anomalie-Erkennung verwendet, um Abweichungen vom Normalzustand zu erkennen. Gemäß der vorliegenden Erfindung jedoch, wird die Anomalie-Erkennung für die Berechnung der Phasenähnlichkeiten zwischen dem aktuellen Phasendurchlauf und historischen Phasendurchläufen zur Prozessoptimierung eingesetzt.

Die Erfindung betrifft demnach ein Verfahren und System zur Verbesserung des Produktionsprozesses in einer technischen Anlage, in welcher ein verfahrenstechnischer Prozess mit mindestens einem Prozessschritt abläuft, wobei einen Durchlauf eines Prozessschritts kennzeichnende Datensätze mit Werten von Prozessvariablen zeitabhängig erfasst und in einem Datenspeicher abgelegt werden, und pro Prozessschritt die Datensätze eines Durchlaufs als Testphase und die Datensätze mindestens eines weiteren Durchlaufs als Referenzphase ausgewählt werden. Anschließend wird paarweise eine Ähnlichkeit zwischen den Datensätzen der Testphase und mindestens einer Referenzphase bestimmt, indem mittels eines Modells Anomalie-Zustände der Testphase im Hinblick auf jede vorhandene Referenzphase bestimmt werden, eine Bewertung der Anomalie-Zustände vorgenommen wird, und mittels der Anomalie-Zustände und der Bewertungen ein Phasenähnlichkeitsmaß berechnet wird, welches zur Optimierung des Prozesses verwendet wird.

Die Vorteile des erfindungsgemäßen Verfahrens und Systems sind vielfältig, weil die Bestimmung des Phasenähnlichkeitsmaßes vielfältig einsetzbar und kombinierbar ist. In Abhängigkeit der Übereinstimmung einer Testphase mit einer historischen Referenzphase können über die bekannten Daten der historischen Referenzphase Aussagen zur Optimierung zukünftiger Testphasen getroffen werden. Handelt es sich bei der historischen Referenzphase beispielsweise um einen Prozessschritt, der eine gute Qualität der Produkte ergibt (beispielsweise ein synthetischer Stoff mit hoher Reinheit), so können die eingestellten Regel- und Bedienparameter dieses Prozessschritts reproduziert werden. Ferner kann auch anhand der Phasenähnlichkeit eine robuste Anomalie-Detektion aufgrund der festgestellten Abweichungen zwischen Test- und Referenzphasendurchgeführt werden.

Im Gegensatz zur Simulation eines rigorosen Prozessmodells entfällt der Aufwand für eine Modellierung komplett. Der Einlernvorgang des verwendeten Datenmodells lässt sich vorteilhafterweise überwiegend automatisieren. Sind keine oder wenig historische Datensätze vorhanden, so reicht im Prinzip eine einzelne Referenzphase aus, um erste grobe Aussagen über vorhandene Anomalien zu tätigen. Da die Erfindung insbesondere für Batch-Prozesse geeignet ist, kann sie vorteilhaft innerhalb der pharmazeutischen Industrie bei der Produktion von Medikamenten oder Impfstoffen verwendet werden.

Das erfindungsgemäße Verfahren hat ferner den Vorteil, neue Daten von Chargenphasen zu analysieren, die während des Modelltrainings nicht verwendet wurden. Bei diesen neuen Datensätzen kann es sich um Datensätze aus einer Phase, die bereits abgeschlossen ist, oder aus einer Phase, die gerade läuft, handeln. Im zweiten Fall vergleicht das System die Phasen bis zum aktuellen relativen Zeitstempel, wobei der relative Zeitstempel stets zeitlich ab Beginn der Phase gemessen wird.

In einer ersten besonders vorteilhaften Ausführungsvariante werden Metadaten der Referenzphasen bei der Optimierung des Prozesses berücksichtigt, indem eine Korrelation zwischen dem Phasenähnlichkeitsmaß der Testphase und der Referenzphase mit den Metadaten der Referenzphase erstellt wird und basierend auf dieser Korrelation Aussagen über die Testphase ermittelt werden und/oder anhand der Metadaten eine Ursachenanalyse erfolgt. Auf der Grundlage der Phasenähnlichkeit bietet das erfindungsgemäße Verfahren eine völlig neue Art der Ursachenanalyse. Die Metadaten einer historischen Referenzphase können beispielsweise Daten über die Qualität eines historischen Durchlaufs kennzeichnen oder Daten über aufgetretene Fehler oder Daten über die während des Durchlaufs verbrauchte Energie enthalten. Wenn beispielsweise ein Problem ein zweites Mal auftritt, liefern diese Metadaten wichtige Informationen für eine schnelle Ursachenanalyse (im Vergleich zur aktuellen Situation). Auch wenn ein Problem zum ersten Mal auftritt, können mittels des erfindungsgemäßen Verfahrens die ähnlichsten historischen Läufe der Phase ermittelt werden. Ein Prozessingenieur kann den Unterschied (z.B. in den Trenddaten) zwischen diesen ähnlichsten historischen Läufen und dem aktuellen Durchlauf analysieren. Die Konzentration auf einige wenige ähnliche historische Durchläufe erlaubt auch in diesem Fall eine rasche Ursachenanalyse.

Für den Fall, dass ein bestimmtes Problem mindestens ein zweites Mal auftritt, liefern die Metadaten demnach wichtige Informationen für eine schnellere Ursachenanalyse (im Vergleich zur aktuellen Situation). Aber auch dann, wenn ein Problem zum ersten Mal auftritt, können mittels des erfindungsgemäßen Verfahrens die ähnlichsten historischen Durchläufe der Phase im Vergleich zu einer Testphase gefunden werden. Ein Verfahrenstechniker kann die Differenz (z. B. in den Trenddaten) zwischen diesen ähnlichsten historischen Durchläufen und dem aktuellen Durchlauf analysieren. Werden nur wenige ähnliche historische Durchläufe betrachtet, kann die Ursachenanalyse beschleunigt werden.

Es ist ein weiterer Vorteil des erfindungsgemäßen Verfahrens, dass das Modelltraining die Metadaten nicht benötigt. Somit kann ein erfindungsgemäßes System komplett ohne historische Aufzeichnungen von Metadaten aufgebaut werden, was den Aufwand für die Systemimplementierung in einer Anlage deutlich reduziert. Falls jedoch Metadaten für die historischen Durchläufe verfügbar sind, können diese Metadaten als Bezeichner (Labels) für das Modelltraining verwendet werden, z. B. um die Anzahl der "guten" (normalerweise sind die meisten Läufe gut) Läufe mit der geringen Anzahl von Fehlern oder "schlechten" Läufen durch Standardtechniken wie Oversampling oder Stichprobengewichte auszugleichen.

In einer weiteren vorteilhaften Ausführungsvariante erfolgt die Berechnung der Anomalie-Zustände dadurch, dass pro Prozessschritt für gleiche Prozessvariablen der Test- und Referenzphase Zeitstempel für Zeitstempel die Größe der Differenzen oder mathematischen Distanzen der Prozessvariablen, deren Toleranzen und/oder der Unterschied der Laufzeiten der Phasen ermittelt wird. Dies ist eine besonders einfache und robuste Vorgehensweise.

In einer weiteren vorteilhaften Ausführungsvariante erfolgt die Bewertung der Anomalie-Zustände mittels Wichtungen und/oder Mittelungen und/oder Kategorien. Auf diese Weise können einzelne Einflussgrößen hinsichtlich ihrer Wichtigkeit bewertet werden. Dies führt vorteilhaft dazu, dass bestimmte Anomalie-Zustände größeren Einfluss auf das Ergebnis der Phasenähnlichkeitsmaßes haben.

In einer besonders vorteilhaften Ausführungsvariante folgt die Bewertung der Anomalie-Zustände einer zuvor definierten Hierarchie. Auf diese Weise kann vorteilhaft eine Entscheidungsstrategie umgesetzt werden, wie bestimmte Abweichungen gewichtet werden sollen. So können z.B. die unterschiedlichen Dauern der Durchläufe der Test- und Referenzphasen stärker gewichtet werden, als die Tatsache welcher Wert der Prozessvariablen größer oder kleiner als der vergleichbare Wert pro Zeitstempel ist. Bestimmen Sensor-bedingte Abweichungen oder Unsicherheiten den Durchlauf, so kann dies im Vergleich zu den unterschiedlichen Phasendurchläufen entsprechend der Gegebenheiten der Anlage gewichtet werden. Dies erlaubt vorteilhaft eine flexible und an die jeweilige Situation und Anlage angepasste Berechnung des Phasenähnlichkeitsmaßes.

In einer weiteren vorteilhaften Ausführung werden basierend auf den berechneten Phasenähnlichkeitsmaßen ähnliche Phasen gruppiert und mittels der Metadaten wird eine Ursachenanalyse für die Gruppierung durchführt. Dies erlaubt Zum Beispiel in erster Näherung Rückschlüsse auf einen systematischen Fehler oder auch ein Hinweis auf sehr gut eingestellte Betriebsparameter der technischen Anlage. Wenn mehrere ähnliche Phasen mit ähnlichen Metadaten korreliert sind, so können erste Hinweise auf ein bestimmtes Verhalten konsolidiert werden.

In einer besonders vorteilhaften Ausführungsvariante des erfindungsgemäßen Verfahrens erfolgt ein Ranking des Phasenähnlichkeitsmaßes und die Phasen mit höchster Übereinstimmung zwischen Test- und Referenzphasen werden auf der Anzeigeeinheit angezeigt. Die Anzeige kann ferner mit der Anzeige von Metadaten der entsprechenden Referenzphase kombiniert werden. Auf diese Weise kann vorteilhaft zurückverfolgt werden, welche Parameter einen besonderen Einfluss auf die Ähnlichkeit zwischen Test- und Referenzphase haben.

Die zuvor ausgeführte Aufgabe wird ferner durch ein System zur Verbesserung des Produktionsprozesses in einer technischen Anlage gelöst. Bei dem Begriff System kann es sich sowohl um ein Hardwaresystem wie einem Computersystem bestehend aus Servern, Netzwerken und Speichereinheiten als auch um ein Softwaresystem wie einer Softwarearchitektur oder ein größeres Softwareprogramm handeln. Auch eine Mischung aus Hardware und Software ist denkbar, beispielsweise eine IT-Infrastruktur wie eine Cloud-Struktur mit ihren Services. Bestandteile einer solchen Infrastruktur sind üblicherweise Server, Speicher, Netzwerke, Datenbanken, Software-Anwendungen und -dienste, Datenverzeichnisse und Datenverwaltungen. Insbesondere virtuelle Server gehören ebenso zu einem System dieser Art.

Das erfindungsgemäße System kann auch Teil eines Computersystems sein, welches sich räumlich getrennt vom Standort der technischen Anlage, befindet. Das angeschlossene externe System, weist dann vorteilhaft die Auswerteeinheit auf, welche auf die Komponenten der technischen Anlage und/oder die damit verbundenen Datenspeicher zugreifen kann, und die ausgebildet ist die berechneten Ergebnisse zu visualisieren und zu einer Anzeigeeinheit zu übertragen. Auf diese Weise kann zum Beispiel eine Kopplung mit einer Cloud-Infrastruktur erfolgen, was weiterhin die Flexibilität der Gesamtlösung erhöht.

Auch lokale Implementierungen auf Computersystemen der technischen Anlage können vorteilhaft sein. So ist eine Implementierung z.B. auf einem Server des Prozessleitsystems oder on premise, d.h. innerhalb einer technischen Anlage insbesondere für sicherheitsrelevante Prozesse besonders geeignet.

Das erfindungsgemäße Verfahren wird somit bevorzugt in Software oder in einer Kombination Soft-/Hardware implementiert, so dass die Erfindung auch ein Computerprogramm mit durch einen Computer ausführbaren Programmcodeanweisungen zur Implementierung des Diagnoseverfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm kann, wie oben beschrieben, in einem Speicher eines Servers eines Prozessleitsystems geladen werden, so dass die Überwachung des Betriebs der technischen Anlage automatisch durchgeführt wird, oder das Computerprogramm kann bei einer Cloud-basierten Überwachung einer technischen Anlage in einem Speicher eines Remote-Service-Rechners vorgehalten oder in diesen ladbar sein.

Die zuvor ausgeführte Aufgabe wird entsprechend auch durch eine graphische Benutzeroberfläche (GUI, graphical user interface) gelöst, welche auf einer Anzeigeeinheit angezeigt wird, und welche dazu ausgebildet ist, die Ergebnisse des erfindungsgemäßen Systems in all seinen Varianten anzuzeigen.

Im Folgenden wird die Erfindung anhand der Figuren und anhand eines Ausführungsbeispiels näher beschrieben und erläutert.

### Es zeigen

Figur 1 eine Gegenüberstellung multivarianter Zeitreihendaten von zwei Durchläufen eines Batch-Prozessschritts
Figur 2 eine schematische Darstellung zur Veranschaulichung der Berechnung der Anomalie-Zustände unter Verwendung einzelner Kategorien für die Zeitstempel der Test- und Referenzphase
Figur 3 ein Beispiel eines zur Durchführung des erfindungsgemäßen Verfahrens geeigneten Systems

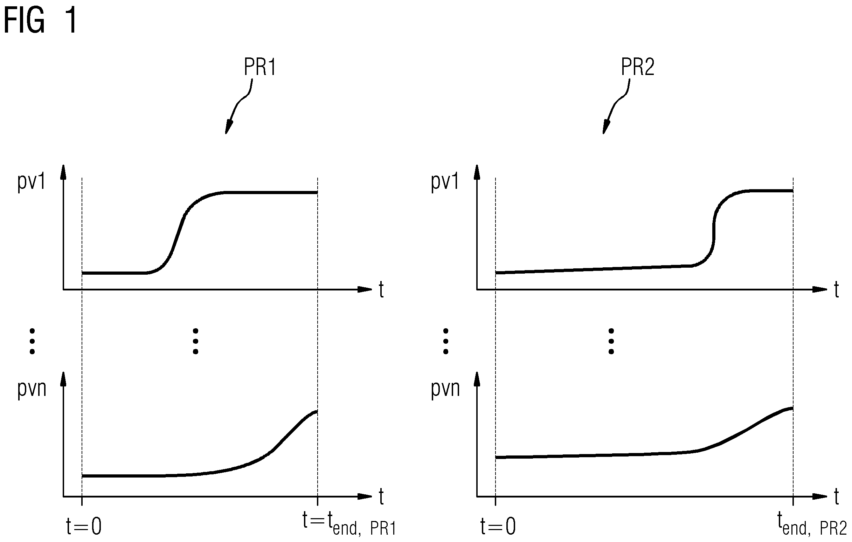

In Fig. 1 sind vereinfacht und schematisch Graphen mit multivarianten Zeitreihendaten eines Batch-Prozessschritts für zwei Durchläufe dargestellt. Auf der linken Seite sind die Trends oder Zeitreihen unterschiedlicher Prozessvariablen pv für einen ersten Durchlauf PR1 eines Prozessschritts oder einer Phase gezeigt. Auf der rechten Seite sind die Trends oder Zeitreihen der gleichen Prozessvariablen pv für einen zweiten Durchlauf PR2 des gleichen Prozessschritts oder Phase gezeigt. Der Begriff Zeitreihe setzt voraus, dass Daten nicht kontinuierlich, sondern diskret (zu bestimmten Zeitstempeln), aber in endlichen zeitlichen Abständen anfallen. Zur Überwachung des Betriebs einer verfahrenstechnischen Anlage wird eine Vielzahl von Datensätzen von Prozessvariablen pv, die den Betrieb der Anlage kennzeichnen, in Abhängigkeit von der Zeit t erfasst und in einem Datenspeicher (häufig ein Archiv) abgespeichert. Zeitabhängig bedeutet hier folglich entweder zu bestimmten einzelnen Zeitpunkten mit Zeitstempeln oder mit einer Abtastrate in regelmäßigen Abständen oder auch annähernd kontinuierlich. In den Datensätzen des ersten Durchlaufs PR1 sind somit n Prozessvariablen pv mit den jeweiligen Zeitstempeln umfasst, wobei n eine beliebige natürliche Zahl darstellt. Prozessvariablen werden in der Regel mittels Sensoren erfasst. Beispiele für Prozessvariablen sind Temperatur T, Druck P, Durchflussmenge F, Füllstand L, Dichte oder Gaskonzentration eines Mediums. Für jede einzelne Prozessvariable wie beispielsweise der Prozessvariablen pv1 gilt pv1(t) = (pv1 (t1), pv1(t2), pv1(t3) ... pv1(tN))^{T} wobei N eine beliebige natürliche Zahl darstellt und der Anzahl der Zeitstempel eines Prozessschritts entspricht. Der Startzeitpunkt jedes Prozessschritts oder Phase ist mit t = 0 bezeichnet und der Endzeitpunkt oder der Zeitstempel, an dem der Prozessschritt oder die Phase endet, ist mit t = tend bezeichnet. Einheiten der Achsen der Graphen sind hier außer Acht gelassen.

In Fig. 1 ist bei Vergleich der multivarianten Daten der beiden Durchläufe PR1 und PR2 deutlich erkennbar, dass es Unterschiede in den Zeitreihen der einzelnen Prozessvariablen gibt: Durchlauf PR2 dauert deutlich länger: tend,PR1 < tend, PR2. Auch die Trendverläufe der einzelnen Prozessvariablen unterscheiden sich. Prozessvariable pv1 des 2. Phasendurchlaufs PR2 steigt später an als im 1. Phasendurchlauf. Zu beachten ist, dass Abweichungen bei den Trenddaten der Prozessvariablen eines Durchlaufs im Vergleich zum anderen Durchlauf auftreten können, auch wenn beide Phasendurchläufe als "gut" eingestuft werden können. Nicht dargestellt sind an dieser Stelle statistische Schwankungen bei der Aufnahme der Messwerte für die Prozessvariablen verursacht durch die Messtechnik der Sensoren.

Im Folgenden wird das erfindungsgemäße Verfahren anhand eines Ausführungsbeispiels im Detail erläutert.

Zunächst wird ein Prozessschritt eines Batch-Prozesses als Testphase tp und mindestens ein Prozessschritt als Referenzphase rf ausgewählt. Anschließend wird paarweise eine Ähnlichkeit zwischen der Testphase tp und mindestens einer der Referenzphasen bestimmt.

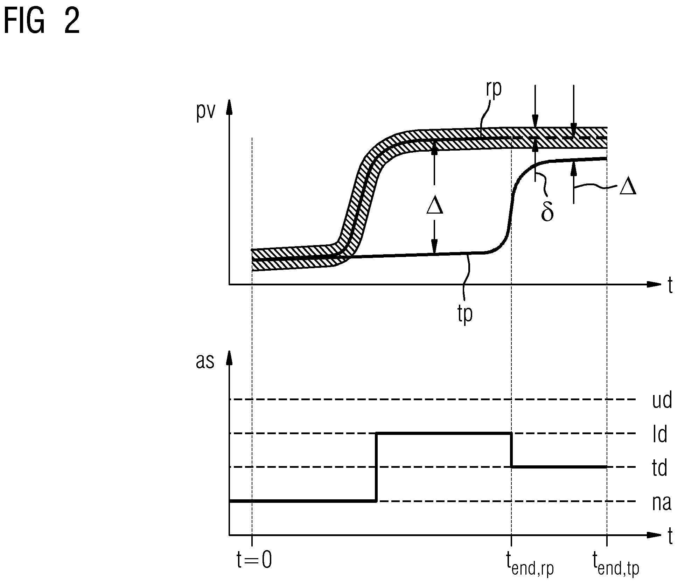

Mittels eines Modells werden Anomalie-Zustände as (siehe Fig. 2) der Testphase tp im Hinblick auf jede vorhandene Referenzphase rp bestimmt:
Die Ermittlung von Anomalie-Zuständen von multivarianten Daten erfolgt häufig mittels eines datenbasierten Modells zur Erkennung von Anomalien, wie es beispielsweise aus der EP 3 282 399 B1 bekannt ist. Die Erkennung der Prozessanomalien erfolgt dort rein datenbasiert mittels so genannter "selbstorganisierender Karten" (engl. "self-organizing maps", abgekürzt SOMs). Die Anomalie-Erkennung ist jedoch nicht auf diese Art von Modell beschränkt. Es kann auch ein anderes datengesteuertes Modell wie ein neuronales Netz oder ein anderes maschinelles Lernmodell verwendet werden, wobei hervorzuheben ist, dass das Modell seine Anomalie-Aussage in Bezug auf eine Referenzphase treffen können muss und nicht allgemein in Bezug auf eine eingelernte normale Datenverteilung.

Das verwendete Modell soll grundsätzlich eine Abbildung des Prozessverhaltens darstellen. Wird das Modell mit historischen "Gut-Daten" eingelernt, stellen sie das Normalverhalten des Prozesses dar. Auch das Einlernen mit historischen "Schlecht-Daten" ist möglich, um ein fehlerhaftes Verhalten des Prozesses abzubilden. Dies bedeutet, dass basierend auf den historischen Daten jegliches Prozessverhalten darstellbar ist. Einzige Voraussetzung dabei ist, dass die Lerndaten repräsentativ für alle im Betrieb auftretenden Fahrweisen und Ereignisse sind.

"Gut-Daten" können durch die Überprüfung historischer Chargenphasen durch Prozessexperten ermittelt werden oder durch Analyse z. B. der Laborwerte des Produkts des Batch-Prozesses, um die Bedingungen abzuleiten, unter denen historische Durchläufe der Phase als gut angesehen werden können. Die multivariaten Trenddaten mehrerer Durchläufe der Phase (vgl. Fig. 1) werden verwendet, um das Modell zur Erkennung von Anomalien zu trainieren. Dies bedeutet insbesondere, dass das Modell die Toleranz des Prozesses auf der Grundlage der historischen Schwankungen in den multivariaten Trenddaten kennt.

Das Anomalie-Erkennungsmodell benötigt somit die folgenden Eingangsdaten: Die multivariaten Trenddaten einer Testchargenphase (neue Daten) und die multivariaten Trenddaten mindesten einer Referenz-Batch-Phase (historische Daten).

Die entsprechenden Phasen-Paare können in einer Ausführungsvariante von einem Nutzer ausgewählt werden oder können anhand von vorhandenen Qualitätsdaten automatisch bestimmt werden. Bei der Test-Phase wird es sich in der Regel um eine Phase eines aktuellen Durchlaufs handeln, denkbar ist aber auch, dass irgendein Durchlauf der entsprechenden Phase als Test-Phase verwendet wird. Bei der Referenzphase wird ein historischer Phasendurchlauf als weiterer Durchlauf verwendet. Für jedes Paar von Durchläufen, wird mittels des Modells zur Erkennung von Anomalien für jeden Zeitstempel der Test-phase die Abweichung zwischen den Prozesswerten von Test- und Referenzphase ermittelt und mit einer Toleranz der Anomalie Detektion gewichtet. Das Ergebnis entspricht einer gewichteten Abweichung zwischen den Prozesswerten von Test- und Referenzphase, der mittels Schwellwerten in vorläufige Anomalie-Zustände umgewandelt werden kann. Zur Unterdrückung von zeitlichen Schwankungen können noch Filter auf die gewichtete Abweichung angewendet werden. Anschließend werden zeitliche Abweichungen zwischen den Prozesswerten von Test- und Referenzphase analysiert. Schließlich resultiert daraus ein multivariater Trend von Anomalie-Zuständen der Testphase in Bezug auf die Referenzphase, der wiederum in das Phasenähnlichkeitsmaß konvertiert wird.

Im Folgenden ist ein Berechnungsbeispiel gegeben: Dabei wird von der Testphase tp für jeden Zeitstempel ti (i = 1 bis N) eines Sensors, der eine Prozessvariable pv aufnimmt, die Abweichung Δ des jeweiligen Prozesswerts zu dem Prozesswert der Referenzphase rp berechnet. Ferner wird eine gewichtete Abweichung Δ/δ berechnet, wobei δ dem halben Toleranzband (siehe Fig. 2) entspricht. Im Fall eines asymmetrischen Toleranzbandes kann auch der entsprechende Teil des Toleranzbandes gewählt werden. In Fig. 2 wäre das der Abstand von rp zur unteren Kante des Toleranzbandes. Liegt keine Abweichung vor oder liegt die Abweichung innerhalb eines Toleranzbandes, so wird der Anomalie-Zustand des entsprechenden Zeitstempels mit einem Ähnlichkeitszählmaß oder einem Ähnlichkeitsgrad von beispielsweise 1 bewertet und der Anomalie-Zustand dieses Zeitstempels erhält diesen Wert. Liegt eine Abweichung vor, wird Anomalie-Zustand des entsprechenden Zeitstempels in diesem Ausführungsbeispiel mit einem Ähnlichkeitsgrad von 0 bewertet und der Anomalie-Zustand dieses Zeitstempels erhält diesen Wert. Durch die Wahl der Werte 0 und 1 wird automatisch eine Normierung erzeugt, die sich als vorteilhaft erweist, um eine Vergleichbarkeit herzustellen.

Das Phasenähnlichkeitsmaß für eine Prozessvariable kann anschließend als Summe über die einzelnen bewerteten Anomalie-Zustände der einzelnen Zeitstempel der Testphase geteilt durch die Anzahl der Zeitstempel der Testphase berechnet werden. (Optional können auch die Anomalie-Zustände ohne Bewertung verwendet werden). Für mehrere Prozessvariablen wird das Summenmaß über alle Anomalie-Zustände der Prozessvariablen gebildet. Das "Gesamt"-Phasenähnlichkeitsmaß kann nun beispielsweise als Mittelwert der Ähnlichkeitsmaße der einzelnen Prozessvariablen gebildet werden. Alternativ ist auch denkbar, dass das schlechteste Ähnlichkeitsmaß als "Gesamt"-Phasenähnlichkeitsmaß angezeigt wird, sodass die Wahrscheinlichkeit, dass die Ähnlichkeit zwischen Test- und Referenzphase besser ist, sicher darüber liegt.

Die Anomalie-Zustände werden in diesem Ausführungsbeispiel gewichtet oder kategorisiert: Folgende Kategorien sind denkbar:
- Obere Abweichung ud: Pro Zeitstempel ist der Prozesswert der Testphase größer als der zugehörige Prozesswert der Referenzphase. Darüber hinaus ist die Differenz größer als eine bestimmte Toleranz, die durch das trainierte Modell definiert wird.
- Untere Abweichung ld: Pro Zeitstempel ist der Prozesswert der Testphase kleiner als der zugehörige Prozesswert der Referenzphase. Darüber hinaus ist die Differenz kleiner als eine bestimmte Toleranz, die durch das trainierte Modell definiert wird.
- Zeitverzögerung td: Die Testphase dauert kürzer oder länger als die Referenzphase und zeigt eine Abweichung im Hinblick auf den Endzeitpunkt der Referenzphase.

Figur 2 zeigt vereinfacht anhand von zwei Graphen beispielhaft die Vorgehensweise bei der Berechnung des Anomalie-Zustände. Hierzu sind im oberen Graphen für eine Prozessvariable pv und einen ausgewählten Prozessschritt der Trend einer Testphase tp und der Trend einer Referenzphase rp mit seiner Toleranz 2δ dargestellt. Der Startzeitpunkt beider Phasen ist gleich (t = 0), während die Endzeitpunkte der Test- und Referenzphase (tend, rp und tend, tp) zeitlich auseinander liegen. Der zuletzt gültige Wert der Prozessvariablen der Referenzphase wird bis zum Endzeitpunkt der Testphase beibehalten, und das Toleranzband wird ebenso weitergeführt. Für diesen Fall ist im unteren Graphen von Fig. 2 der Anomalie-Zustand as ebenfalls gegen die Zeit t aufgetragen. Der untere Graph zeigt den Anomalie-Zustand as vereinfacht für einen einzelnen Prozesswert pv gegen die Zeit aufgetragen. Pro Zeitstempel sind die jeweiligen Abweichungen Δ zwischen den Datensätzen umfassend die eine Prozessvariable pv der Test-phase tp und den Datensätzen umfassend die eine Prozessvariable pv der Referenzphase rp berechnet worden und das Ergebnis der jeweiligen Kategorie zugeordnet. Zu Beginn liegt keine Anomalie vor oder die Abweichung unterhalb eines Schwellwerts. Diese Anomalie-Zustände werden der Kategorie na zugeordnet. Die Anomalie-Zustände der darauffolgenden Zeitstempel sind der Kategorie ld zugeordnet, da pro Zeitstempel der Prozesswert der Testphase kleiner als der zugehörige Prozesswert der Referenzphase ist. Die Anomalie-Zustände der dieser Kategorie folgenden Zeitstempel sind der Kategorie td zugeordnet, da hier Unterschiede zwischen der Dauer der Test- und Referenzphase vorliegen.

Die Tatsache, dass die Anomalie-Zustände kategorische Größen sind, ermöglicht es, kurze zufällige Abweichungen zu unterdrücken. Beispielsweise kurze Spitzen in den Prozesswerten aufgrund eines Netzwerkproblems, die keinen Einfluss auf den Prozess haben (nur ein falscher Sensormesswert des Systems, aber kein falscher Prozesswert an der physischen Anlage). Andere Ähnlichkeitsmaße wie der euklidische Abstand oder der Manhattan-Abstand wären sehr empfindlich auf diese kurzen Zufallsspitzen reagieren. Der oben beschriebene Ansatz ist robust gegenüber diesen Ausschlägen, weil jeder Zeitstempel nur einen begrenzten Ähnlichkeitswert hat.

Darüber hinaus können den Anomalie-Zuständen weitere Bewertungen zugeordnet werden, wie z.B. dass die Zeitdauer der Testphase kürzer als erwartet ausfällt oder eine Bewertung für Anomalie-Zustände, bei denen die Abweichung außerordentlich groß ist (Ausreißer), oder eine Wichtung, welche die Anzahl der abweichenden Prozesswerte pro Zeitstempel berücksichtigt.

Ferner können den einzelnen Kategorien der Anomalie-Zustände einzelne Wichtungen zugeordnet werden. Je nachdem welche Kategorien der Anomalie-Zustände vorliegen, lässt sich so eine Hierarchie oder eine Baumstruktur erstellen.

In einem weiteren Ausführungsbeispiel werden die Anomalie-Zustände aller Prozessvariablen der Test- und Referenzphasen in Abhängigkeit von den Zeitstempeln gemeinsam statistisch ausgewertet und entsprechend einer Hierarchie analysiert und bewertet. Die Phasenähnlichkeit zwischen den Durchläufen der Test- und Referenzphasen kann beispielsweise durch einen die Hierarchie kennzeichnenden Summanden plus einen Skalierungsfaktor (legt die Reihenfolge innerhalb einer Hierarchieebene fest) berechnet werden. Wenn es beispielsweise keinerlei Sensorabweichungen (d.h. alle Anomalie-Zustände können der Kategorie na der Fig.2 zugeordnet werden) oder keine zeitlichen Abweichungen zwischen den Datensätzen der Prozessvariablen der Test- und Referenzphase gibt, so kann die Phasenähnlichkeit durch einen Wert + (1- gewichtete Abweichung zwischen Test- und Referenzphase gemittelt über alle Zeitstempel und Prozessvariablen / Maximalabweichung) * 0.1 berechnet werden.

Folgende Hierarchie für die Phasenähnlichkeitsmaße ist denkbar:
Keine Abweichung -> [0.9, 1.0]
Zeitliche Abweichung -> [0.8, 0.9]
Zeitliche Abweichung mit Sensor Abweichung nach Ende der Referenzphase -> [0.65, 0.8]
Sensorabweichung -> [0, 0.65]

Basierend auf den Bewertungen einzelner Einflussgrößen wird somit ein Phasenähnlichkeitsmaß bestimmt, welches zur Optimierung des Prozesses verwendet wird. Das Phasenähnlichkeitsmaß kann dabei vorteilhaft zur besseren Vergleichbarkeit auf Werte zwischen Null und Eins normiert werden.

Mit den berechneten Phasenähnlichkeitsmaßen können nun wertvolle Statistiken durchgeführt werden. In Abhängigkeit von dem Phasenähnlichkeitsmaß können beispielsweise die Referenzphasen mit der größten Ähnlichkeit zur Testphase angezeigt werden. Dabei kann ein Ranking oder eine Sortierung erfolgen. In Kombination mit historischen Datensätzen und Metadaten kann mittels der berechneten Phasenähnlichkeitsmaße eine Ursachenanalyse z.B. von Symptomen eines fehlerhaften Produktionsprozesses in Batch-Prozessen unterstützt und beschleunigt werden.

Zur Durchführung einer solchen robusten Ursachenanalyse kann für eine Anzahl der ähnlichsten Durchläufe einem Anlagenbetreiber oder einem Prozessingenieur unterschiedlichste Informationen in Kombination mit dem Phasenähnlichkeitsmaß angezeigt werden. Eine Software Applikation, in welcher das erfindungsgemäße Verfahren implementiert ist, könnte zum Beispiel derart ausgestaltet sein, dass in einer Gegenüberstellung das Phasenähnlichkeitsmaß (vorteilhafterweise normalisiert auf [0, 1]) einer Testphase (hier Durchlauf 4) mit den Durchläufen unterschiedlicher Referenzphasen (hier Durchläufe 1 bis 3) aus der Historie zusammen mit historischen Aufzeichnungen und Metadaten der jeweiligen Referenzphase angezeigt werden:

| | Ähnlichkeitsmaß zu Durchlauf 4 | Historische Aufzeichnungen |
|---|---|---|
| Durchlauf 1 | 0.72 | Phase OK. |
| Durchlauf 2 | **0.98** | Ventil V2 verstopft, muss gereinigt werden |
| Durchlauf 3 | 0.66 | Phase OK. |

Die Informationen der Referenzphase können neben einer Information über die Qualität des Durchlaufs (Phase "gut", "schlecht" oder "mittel") beispielsweise auch eindeutige Kennungen (Identifier), genaue Start- und Endzeitpunkte des historischen Durchlaufs und Metadaten des historischen Durchlaufs umfassen. Eine Qualitätsaussage des Referenzdurchlaufs kann sich aus der Qualität des Produkts ableiten, die zuvor im Labor bestimmt wurde. Ferner können die Metadaten Aufzeichnungen über Ausfälle in dem entsprechenden Durchlauf enthalten (z. B. verstopftes Ventil) oder auch erste Lösungsansätze (z. B. Ventilreinigung notwendig). Auch Aufzeichnungen über den Energieverbrauch, Materialverbrauch, Materialeigenschaften oder sonstige historische Kommentare, die von Anlagenbetreibern oder Verfahrenstechnikern für den betrachteten Referenz-Durchlauf registriert wurden, sind denkbar.

Der genaue Inhalt der Metadaten kann ferner für jeden Anwendungsfall konfiguriert werden. Schließlich ist zu beachten, dass die Metadaten aus unterschiedlichen Informationsquellen stammen können und der Zugriff darauf entweder manuell oder automatisch erfolgen kann.

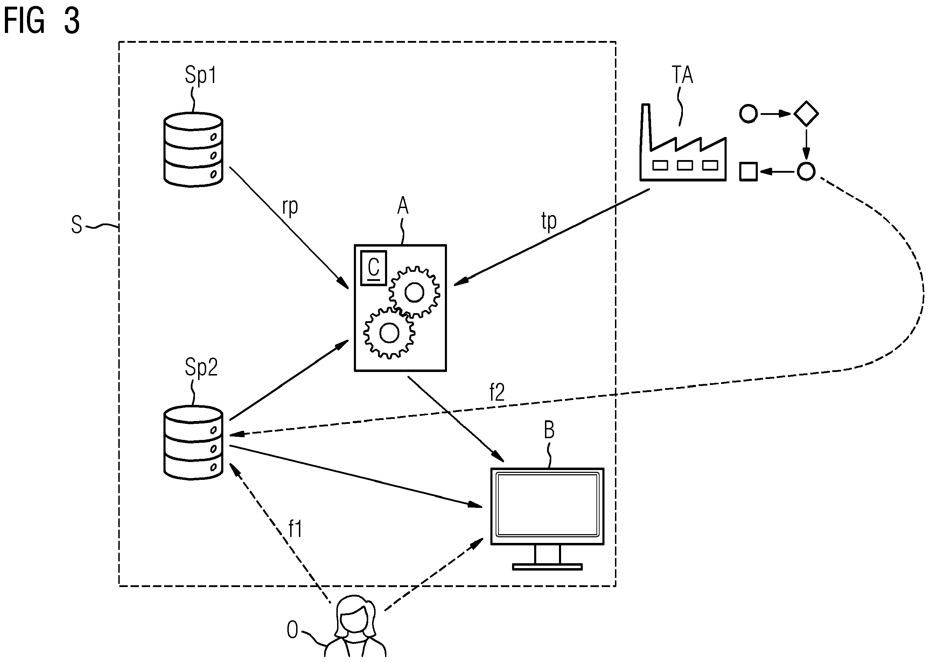

In diesem Zusammenhang wird auf Figur 3 verwiesen. Dort ist ein Ausführungsbeispiel für ein System S gezeigt, welches derart ausgebildet ist, das erfindungsgemäße Verfahren durchzuführen. Das System S umfasst in diesem Ausführungsbeispiel zwei Einheiten zum Speichern von Daten. Je nach Ausführung sollte mindestens ein Datenspeicher vorhanden sein. Datenspeicher Spl enthält in diesem Ausführungsbeispiel eine Vielzahl von historischen Datensätzen mit den multivarianten Trends der Phasen-Durchläufe. Alle historischen Datensätze, Datensätze, die Werte von einer Vielzahl von Prozessvariablen mit entsprechenden Zeitstempeln enthalten, können zum Lernen des Modells zur Anomalie-Bestimmung verwendet werden. Es kann auch eine eigene Einheit L (nicht dargestellt) zum Trainieren des Modells zur Anomalie-Bestimmung vorgesehen sein, die dazu die historischen Datensätze mit zeitabhängigen Messwerten von Prozessvariablen verwendet und welche dazu mit dem Datenspeicher Spl verbunden ist. Diese Einheit L kann vorteilhaft offline betrieben werden, da der Einlernvorgang häufig rechenintensiv ist, was vor allem beim Vorliegen von Datensätzen vieler Referenzphasen der Fall ist.

Für die Berechnung des Phasenähnlichkeitsmaßes zwischen einer Testphase tp und Referenzphase rp, welche hier in der Recheneinheit C erfolgt, ist die Recheneinheit C mit der Speichereinheit Spl verbunden. In einer besonders vorteilhaften Ausführung ist die Recheneinheit C Teil einer Auswerteeinheit A. Denkbar sind jeweils unterschiedliche Einheiten A und C oder nur eine Einheit in Form eines Servers, der in einer Applikation alle Funktionen (die Berechnung und Auswertung) vereint. Die Auswerteeinheit A und/oder die Recheneinheit C kann ferner mit einem Leitsystem einer technischen Anlage TA oder einem Rechner einer technischen Teilanlage TA, in welchen ein verfahrenstechnischer Prozess mit mindestens einem Prozessschritt abläuft, über eine Kommunikationsschnittstelle verbunden sein, über welche (z.B. auf Anfrage) die multivarianten Datensätze der Testphasen-Durchläufe übermittelt werden. In der technischen Anlage TA steuert, regelt und/oder überwacht ein Automatisierungssystem oder ein Prozessleitsystem einen verfahrenstechnischen Prozess. Dazu ist das Prozessleitsystem mit einer Vielzahl von Feldgeräten (nicht dargestellt) verbunden. Messumformer und Sensoren dienen zur Erfassung von Prozessvariablen, wie beispielsweise Temperatur T, Druck P, Durchflussmenge F, Füllstand L, Dichte oder Gaskonzentration eines Mediums.

Die mittels der Auswerteeinheit A ermittelten Phasenähnlichkeiten und weitere Analyseergebnisse werden in dem in Fig. 3 skizierten Ausführungsbeispiel auf der Benutzeroberfläche einer Anzeigeeinheit B zur Visualisierung ausgegeben. Die Anzeigeeinheit B kann auch direkt an das System anschließbar sein oder je nach Implementierung beispielsweise über einen Datenbus mit dem System verbunden sein. In einer besonders vorteilhaften Ausführungsvariante werden die Phasenähnlichkeitsmaße in Verbindung mit Metadaten auf der Benutzeroberfläche angezeigt. Hierzu ist die Anzeigeeinheit B mit der Speichereinheit Sp2, in welcher die Metadaten der Referenzphasen oder der historischen Durchläufe der Phasen abgelegt sind, verbunden. Denkbar ist auch eine Kommunikationsverbindung zwischen der Auswerteeinheit A und/oder der Berechnungseinheit C, um Korrelationen zwischen den Meta-Daten und dem Phasenähnlichkeitsmaß zu berechnen.

Auf der Benutzeroberfläche der Bedieneinheit werden in einem Ausführungsbeispiel die Referenzphasen mit dem höchsten Übereinstimmungsmaß mit den Test-Phasen angezeigt. Zusätzlich werden die zugehörigen Metadaten der Referenzphasen angezeigt. An dieser Stelle kann ein Systemnutzer oder Operator O oder ein Prozessexperte das Ergebnis überprüfen und die Ursache von Problemen ermitteln. Die gestrichelten Linien f1 und f2 zeigen Rückmeldungen zum Metadatenspeicher an, die entweder automatisch aus verfügbaren Datenquellen wie dem Leitsystem der technischen Anlage TA abgerufen werden oder durch Kommentare des Systemnutzers O generiert werden. So besteht die Möglichkeit, dass ein Systemnutzer O während der Ursachenanalyse für die aktuell analysierte Testphase Kommentare oder Metadatendatensätze in einem Eingabefeld der Benutzeroberfläche eingibt. Durch das Speichern dieser Metadaten wird das System im Laufe der Zeit intelligenter und kann als selbstlernendes System betrachtet werden.

In einer weiteren vorteilhaften Weiterbildung der Erfindung werden eine konfigurierbare Auswahl der zeitlichen Verläufe der Prozessvariablen und/oder Anomalie-Zustände der Test- und Referenzphase gleichzeitig und/oder in Korrelation zueinander als zeitliche Verläufe auf einer Anzeige-Einheit dargestellt. Die Überwachung des verfahrenstechnischen Prozesses wird auf diese Weise für einen Anlagenfahrer oder den Bediener einer erfindungsgemäßen Software-Applikation erleichtert. Um mit den dargestellten Ergebnissen an einer Problembehandlung effizient arbeiten zu können, ist eine konfigurierbare Auswahl der Ergebnisse besonders vorteilhaft. Durch eine angemessene Darstellung können Anlagenbediener in kritischen Situationen schnell handeln und einen Fehlerfall vermeiden. Eine schnelle Interaktion kann sowohl Kosten und Zeit einsparen als auch schlimmere Gefahren abwenden.

Das System S zur Durchführung des erfindungsgemäßen Verfahrens kann beispielsweise auch in einer Client-Server-Architektur realisiert werden. Hierbei dient der Server mit seinen Datenspeichern der Bereitstellung von gewissen Diensten wie dem erfindungsgemäßen System, zur Bearbeitung einer genau definierten Aufgabe (hier die Berechnung des Phasenähnlichkeitsmaßes). Der Client (hier die Anzeige-Einheit B) ist in der Lage, die entsprechenden Dienste vom Server anzufordern und zu nutzen. Typische Server sind Webserver zum Bereitstellen von Web-Seiten-Inhalten, Datenbankserver zum Speichern von Daten oder Anwendungsserver zum Bereitstellen von Programmen. Die Interaktion zwischen dem Server und Client erfolgt über geeignete Kommunikationsprotokolle wie http oder jdbc. Eine weitere Möglichkeit ist der Einsatz des Verfahrens als Applikation in einer Cloud Umgebung (z.B. der Siemens MindSphere), wobei ein oder mehrere Server das erfindungsgemäße System in der Cloud beherbergen. Alternativ kann das System als On-Premise Lösung direkt auf der technischen Anlage implementiert sein, sodass eine lokale Verbindung zu Datenbanken und Rechnern auf der Leitsystemebene möglich ist.

## Patentansprüche

1. Verfahren zur Verbesserung des Produktionsprozesses in einer technischen Anlage, in welcher ein verfahrenstechnischer Prozess mit mindestens einem Prozessschritt abläuft, wobei einen Durchlauf (PR1, PR2) eines Prozessschritts kennzeichnende Datensätze mit Werten von Prozessvariablen (pv1, pv2, ..., pvn) zeitabhängig (t0, t1, ..., tN) erfasst und in einem Datenspeicher abgelegt werden,
**dadurch gekennzeichnet,**
**dass** pro Prozessschritt die Datensätze eines Durchlaufs (PR1) als Testphase (tp) und die Datensätze mindestens eines weiteren Durchlaufs (PR2) als Referenzphase (rp) ausgewählt werden,
**dass** paarweise eine Ähnlichkeit zwischen den Datensätzen der Testphase (tp) und mindestens einer Referenzphase (rp) bestimmt wird, indem
- zunächst mittels eines Modells Anomalie-Zustände der Test-phase im Hinblick auf jede vorhandene Referenzphase bestimmt werden,
- eine Bewertung der Anomalie-Zustände vorgenommen wird, und
- mittels der Anomalie-Zustände und der Bewertungen ein Phasenähnlichkeitsmaß berechnet wird,
welches zur Optimierung des Prozesses verwendet wird.

2. Verfahren nach Anspruch 1,
**dadurch gekennzeichnet,**
**dass** Metadaten der Referenzphasen bei der Optimierung des Prozesses berücksichtigt werden, indem eine Korrelation zwischen dem Phasenähnlichkeitsmaß zwischen der Test- und Referenzphase mit den Metadaten der Referenzphase erstellt wird und basierend auf dieser Korrelation Aussagen über die Test- phase ermittelt werden und/oder anhand der Metadaten eine Ursachenanalyse erfolgt.

3. Verfahren nach Anspruch 1 oder 2,
**dadurch gekennzeichnet,**
**dass** die Berechnung der Anomalie-Zustände dadurch erfolgt, dass pro Prozessschritt für gleiche Prozessvariablen der Test- und Referenzphase Zeitstempel für Zeitstempel die Größe der Differenzen oder mathematischen Distanzen der Werte der Prozessvariablen der betrachteten Phasen, deren Toleranzen und/oder der Unterschied der Laufzeiten der Phasen ermittelt wird.

4. Verfahren nach einem der vorhergehenden Ansprüche, **dadurch gekennzeichnet,**
**dass** die Bewertung der Anomalie-Zustände mittels Wichtungen und/oder Mittelungen und/oder Kategorien vorgenommen wird.

5. Verfahren nach einem der vorhergehenden Ansprüche, **dadurch gekennzeichnet,**
**dass** die Bewertung der Anomalie-Zustände einer zuvor definierten Hierarchie folgt.

6. Verfahren nach einem der vorhergehenden Ansprüche, **dadurch gekennzeichnet,**
**dass** basierend auf Phasenähnlichkeitsmaß ähnliche Phasen gruppiert werden und mittels der Metadaten eine Ursachenanalyse für die Gruppierung durchführt wird.

7. Verfahren nach einem der vorhergehenden Ansprüche, **dadurch gekennzeichnet,**
**dass** ein Ranking des Phasenähnlichkeitsmaßes erfolgt und die Phasen mit höchster Übereinstimmung zwischen Test- und Referenzphasen angezeigt werden

8. System (S) zur Verbesserung des Betriebs einer technischen Anlage, in welcher ein verfahrenstechnischer Prozess mit mindestens einem Prozessschritt abläuft,
umfassend mindestens:
- eine Einheit (Sp1, Sp2) zum Speichern historischer Datensätze mit Werten von zeitabhängig (t0, t1,..., tN) ermittelten Prozessvariablen (pv1, pv2,..., pvn), welche einen Durchlauf (Run1) eines Prozessschritts (Phase) kennzeichnen, und/oder zum Speichern von Metadaten, welche mit den historischen Datensätzen in Verbindung stehen, und/oder zum Speichern von Toleranzen, Anomalie-Zuständen, Phasenähnlichkeiten und/oder weiteren Daten, die zur Durchführung des Verfahrens nach einem der Ansprüche 1 bis 7 notwendig sind,
- eine Recheneinheit (C), welche mit der mindestens einen Speichereinheit (Sp1, Sp2) verbunden ist und ausgebildet ist, mittels der Datensätze ein Phasenähnlichkeitsmaß nach einem der Ansprüche 1 bis 7 zwischen einer Testphase (tp) und Referenzphase (rp) zu berechnen,
- eine Einheit (A) zum Auswerten der aktuellen Datensätze eines Durchlaufs einer Testphase (tp) mit Hilfe der Recheneinheit (C),
- eine Einheit (B) zum Anzeigen und Ausgeben der mittels der Auswerteeinheit (A) ermittelten Phasenähnlichkeiten und weiterer Analyseergebnisse.

9. Computerprogramm, insbesondere Software-Applikation, mit durch einen Computer ausführbaren Programmcodeanweisungen zur Implementierung des Verfahrens nach einem der Ansprüche 1 bis 7, wenn das Computerprogramm auf einem Computer ausgeführt wird.

10. Computerprogrammprodukt, insbesondere Datenträger oder Speichermedium, mit einem durch einen Computer ausführbaren Computerprogramm gemäß Anspruch 9.

11. Graphische Benutzeroberfläche (GUI), welche auf einer Anzeigeeinheit angezeigt wird, und welche dazu ausgebildet ist, die mittels des Systems nach Anspruch 8 ermittelten Phasenähnlichkeitsmaße von Test- und Referenzphasen optional in Zusammenhang mit Metadaten der Referenzphasen anzuzeigen.
